# EUROPEAN PATENT APPLICATION

(11) **EP 3 745 600 A1**
(43) Date of publication of application: **02.12.2020**
(21) Application number: 20160921.1
(22) Date of filing: 04.03.2020
(51) Int. Cl.: H04B 1/3822, H04B 7/155, H04B 3/54

(54) **POWER ADAPTOR WITH INTEGRATED SERVER ANTENNA**

(30) Priority: 05.03.2019 US 201962814153 P; 26.02.2020 US 202016801340
(71) Applicant: Wilson Electronics, LLC, St. George, UT 84790 (US)
(72) Inventor: JUDD, Samuel Vaughn, St George, UT Utah 84790 (US); MOUSER, Michael James, Wylie, TX Texas 75098 (US); ASHWORTH, Christopher Ken, Toquerville, UT Utah 84774 (US)
(74) Representative: ip21 Ltd

(57) **Abstract**

A technology is described for a repeater system. The repeater system can comprise a repeater and a power adaptor. The repeater can comprise a donor port, a server port, and one or more amplification and filtering paths coupled between the donor port and the server port. The power adaptor can be integrated with a server antenna. The integrated power adaptor can be configured to be coupled to a power supply and the server port to enable the repeater to receive power from the power supply and to communicate a signal between the server antenna and the server port.

## Description

### BACKGROUND

Repeaters can be used to increase the quality of wireless communication between a wireless device and a wireless communication access point, such as a cell tower. Repeaters can improve the quality of the wireless communication by amplifying, filtering, and/or applying other processing techniques to uplink and downlink signals communicated between the wireless device and the wireless communication access point.

As an example, the repeater can receive, via an antenna, downlink signals from the wireless communication access point. The repeater can amplify the downlink signal and then provide an amplified downlink signal to the wireless device. In other words, the repeater can act as a relay between the wireless device and the wireless communication access point. As a result, the wireless device can receive a stronger signal from the wireless communication access point. Similarly, uplink signals from the wireless device (e.g., telephone calls and other data) can be received at the repeater. The repeater can amplify the uplink signals before communicating, via an antenna, the uplink signals to the wireless communication access point.

### BRIEF DESCRIPTION OF THE DRAWINGS

Features and advantages of the disclosure will be apparent from the detailed description which follows, taken in conjunction with the accompanying drawings, which together illustrate, by way of example, features of the disclosure; and, wherein:
FIG. 1 illustrates a repeater in accordance with an example;
FIG. 2 illustrates a repeater in communication with a user equipment (UE) and a base station (BS) in accordance with an example;
FIG. 3 illustrates a repeater in communication with a wireless device in accordance with an example;
FIG. 4 illustrates a frequency division duplex (FDD) multiband repeater in accordance with an example;
FIG. 5 illustrates a repeater in accordance with an example;
FIG. 6a illustrates a repeater in accordance with an example;
FIG. 6b illustrates a repeater in accordance with an example;
FIG. 6c illustrates a signal booster coupled to a direct current (DC) coupling box in accordance with an example;
FIG. 7 illustrates a repeater in accordance with an example;
FIG. 8 illustrates a repeater in accordance with an example;
FIG. 9 illustrates a handheld booster in communication with a wireless device in accordance with an example; and
FIG. 10 illustrates a user equipment (UE) in accordance with an example.

Reference will now be made to the exemplary embodiments illustrated, and specific language will be used herein to describe the same. It will nevertheless be understood that no limitation of the scope of the invention is thereby intended.

### DETAILED DESCRIPTION

Before the present invention is disclosed and described, it is to be understood that this invention is not limited to the particular structures, process steps, or materials disclosed herein, but is extended to equivalents thereof as would be recognized by those ordinarily skilled in the relevant arts. It should also be understood that terminology employed herein is used for the purpose of describing particular examples only and is not intended to be limiting. The same reference numerals in different drawings represent the same element. Numbers provided in flow charts and processes are provided for clarity in illustrating steps and operations and do not necessarily indicate a particular order or sequence.

### EXAMPLE EMBODIMENTS

An initial overview of technology embodiments is provided below and then specific technology embodiments are described in further detail later. This initial summary is intended to aid readers in understanding the technology more quickly but is not intended to identify key features or essential features of the technology nor is it intended to limit the scope of the claimed subject matter.

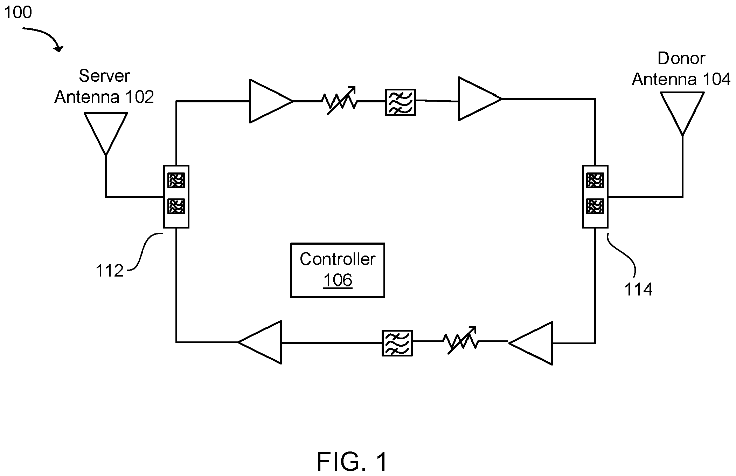

In an example, as illustrated in FIG. 1, a bi-directional repeater system can comprise a repeater 100 connected to an outside antenna 104 or donor antenna 104 and an inside antenna 102 or server antenna 102. The repeater 100 can include a donor antenna port that can be internally coupled to a second duplexer (or diplexer or multiplexer or circulator or splitter) 114. The repeater 100 can include a server antenna port that can also be coupled to a first duplexer (or diplexer or multiplexer or circulator or splitter) 112. Between the two duplexers, 114 and 112, can be two paths: a first path and a second path. The first path can comprise a low noise amplifier (LNA) with an input coupled to the first duplexer 112, a variable attenuator coupled to an output of the LNA, a filter coupled to the variable attenuator, and a power amplifier (PA) coupled between the filter and the second duplexer 114. The LNA can amplify a lower power signal with minimal degradation of the signal to noise ratio of the lower power signal. The PA can adjust and amplify the power level of the lower power signal by a desired amount. A second path can comprise an LNA with an input coupled to the second duplexer 114, a variable attenuator coupled to an output of the LNA, a filter coupled to the variable attenuator, and a PA coupled between the filter and the first duplexer 112. The first path can be a downlink amplification path or an uplink amplification path. The second path can be a downlink amplification path or an uplink amplification path. The repeater 100 can also comprise a controller 106. In one example, the controller 106 can include one or more processors and memory. The controller can be communicatively coupled to the amplifiers, variable attenuators, LNA, PA, and other desired active components. The controller can be used to turn components on, off, control signal levels, receive data from the signal, input data to the signal, and apply other desired signal processing.

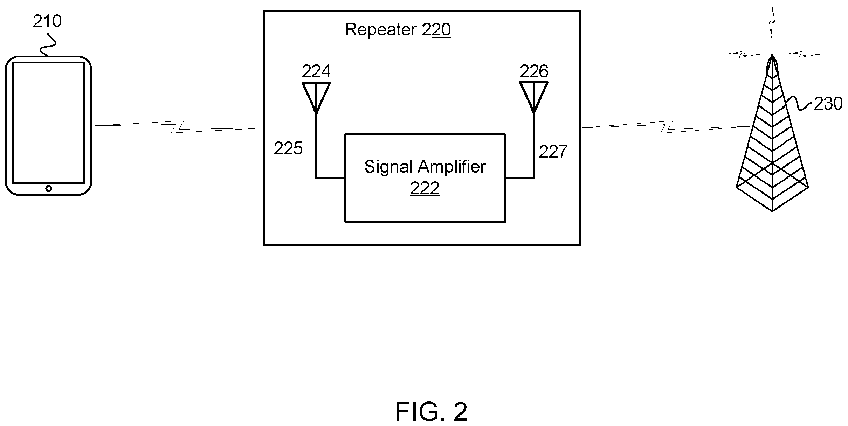

FIG. 2 illustrates an exemplary repeater 220 in communication with a wireless device 210 and a base station 230. The repeater 220 (also referred to as a cellular signal amplifier) can improve the quality of wireless communication by amplifying, filtering, and/or applying other processing techniques via a signal amplifier 222 to uplink signals communicated from the wireless device 210 to the base station 230 and/or downlink signals communicated from the base station 230 to the wireless device 210. In other words, the repeater 220 can amplify or boost uplink signals and/or downlink signals bi-directionally. In one example, the repeater 220 can be at a fixed location, such as in a home or office. Alternatively, the repeater 220 can be attached to a mobile object, such as a vehicle or a wireless device 210. The repeater can be a signal booster, such as a cellular signal booster.

In one configuration, the repeater 220 can be configured to be connected to a device antenna 224 (e.g., an inside antenna, server antenna, or a coupling antenna) and a node antenna 226 (e.g., an outside antenna or donor antenna). The node antenna 226 can receive the downlink signal from the base station 230. The downlink signal can be provided to the signal amplifier 222 via a second coaxial cable 227 or other type of wired, wireless, optical, or radio frequency connection operable to communicate radio frequency signals. The signal amplifier 222 can include one or more radio signal amplifiers for amplification and filtering of cellular signals. The downlink signal that has been amplified and filtered can be provided to the device antenna 224 via a first coaxial cable 225 or other type of radio frequency connection operable to communicate radio frequency signals. The device antenna 224 can communicate the downlink signal that has been amplified and filtered to the wireless device 210.

Similarly, the device antenna 224 can receive an uplink signal from the wireless device 210. The uplink signal can be provided to the signal amplifier 222 via the first coaxial cable 225 or other type of wired, wireless, optical, or radio frequency connection operable to communicate radio frequency signals. The signal amplifier 222 can include one or more radio signal amplifiers for amplification and filtering of cellular signals. The uplink signal that has been amplified and filtered can be provided to the node antenna 226 via the second coaxial cable 227 or other type of wired, wireless, optical, or radio frequency connection operable to communicate radio frequency signals. The node antenna 226 can communicate the uplink signal that has been amplified and filtered to a node, such as base station 230.

In one embodiment, the device antenna 224 and the node antenna 226 can be integrated as part of the repeater 220. Alternatively, the repeater 220 can be configured to be connected to a separate device antenna 224 or node antenna 226. The device antenna and the node antenna may be provided by a different provider than the repeater 220.

In one example, the repeater 220 can send uplink signals to a node and/or receive downlink signals from the node. While FIG. 2 shows the node as a base station 230, this is not intended to be limiting. The node can comprise a wireless wide area network (WWAN) access point (AP), a base station (BS), an evolved Node B (eNB), a next generation Node B (gNB), a baseband unit (BBU), a remote radio head (RRH), a remote radio equipment (RRE), a relay station (RS), a radio equipment (RE), a remote radio unit (RRU), a central processing module (CPM), or another type of VVWAN access point.

In one configuration, the repeater 220 used to amplify the uplink and/or a downlink signal can be a handheld booster. The handheld booster can be implemented in a sleeve of the wireless device 210. The wireless device sleeve may be attached to the wireless device 210, but may be removed as needed. In this configuration, the repeater 220 can automatically power down or cease amplification when the wireless device 210 approaches a particular base station. In other words, the repeater 220 may determine to stop performing signal amplification when the quality of uplink and/or downlink signals is above a defined threshold based on a location of the wireless device 210 in relation to the base station 230.

In one example, the repeater 220 can include a battery to provide power to various components, such as the signal amplifier 222, the device antenna 224, and the node antenna 226. The battery can also power the wireless device 210 (e.g., phone or tablet). Alternatively, the repeater 220 can receive power from the wireless device 210.

In one configuration, the repeater 220 can be a Federal Communications Commission (FCC)-compatible consumer repeater. As a non-limiting example, the repeater 220 can be compatible with FCC Part 20 or 47 Code of Federal Regulations (C.F.R.) Part 20.21 (March 21, 2013). In addition, the handheld booster can operate on the frequencies used for the provision of subscriber-based services under parts 22 (Cellular), 24 (Broadband PCS), 27 (AWS-1, 700 megahertz (MHz) Lower A-E Blocks, and 700 MHz Upper C Block), and 90 (Specialized Mobile Radio) of 47 C.F.R. The repeater 220 can be configured to automatically self-monitor its operation to ensure compliance with applicable noise and gain limits. The repeater 220 can either self-correct or shut down automatically if the repeater's operations violate the regulations defined in 47 CFR Part 20.21. While a repeater that is compatible with FCC regulations is provided as an example, it is not intended to be limiting. The repeater can be configured to be compatible with other governmental regulations based on the location where the repeater is configured to operate.

In one configuration, the repeater 220 can enhance the wireless connection between the wireless device 210 and the base station 230 (e.g., cell tower) or another type of wireless wide area network (WWAN) access point (AP). The repeater 220 can boost signals for cellular standards, such as the Third Generation Partnership Project (3GPP) Long Term Evolution (LTE) Release 8, 9, 10, 11, 12, 13, 14, 15 or 16, 3GPP 5G Release 15 or 16, or Institute of Electronics and Electrical Engineers (IEEE) 802.16. In one configuration, the repeater 220 can boost signals for 3GPP LTE Release 16.0.0 (January 2019) or other desired releases. The repeater 220 can boost signals from the 3GPP Technical Specification (TS) 36.101 (Release 16 July 2019) bands or LTE frequency bands. For example, the repeater 220 can boost signals from the LTE frequency bands: 2, 4, 5, 12, 13, 17, 25, and 26. In addition, the repeater 220 can boost selected frequency bands based on the country or region in which the signal booster is used, including any of bands 1-85 or other bands, as disclosed in 3GPP TS 36.104 V16.0.0 (January 2019), and depicted in Table 1:

**Table 1:**

| **LTE Operatin g Band** | **Uplink (UL) operating band BS receive UE transmit** | | | **Downlink (DL) operating band BS transmit UE receive** | | | **Duplex Mode** |
|---|---|---|---|---|---|---|---|
| | F_{UL_low} - F_{UL_high} | | | F_{DL_low} - F_{DL_high} | | | |
| 1 | 1920 MHz | - | 1980 MHz | 2110 MHz | - | 2170 MHz | FDD |
| 2 | 1850 MHz | - | 1910 MHz | 1930 MHz | - | 1990 MHz | FDD |
| 3 | 1710 MHz | - | 1785 MHz | 1805 MHz | - | 1880 MHz | FDD |
| 4 | 1710 MHz | - | 1755 MHz | 2110 MHz | - | 2155 MHz | FDD |
| 5 | 824 MHz | - | 849 MHz | 869 MHz | - | 894MHz | FDD |
| 6 (NOTE 1) | 830 MHz | - | 840 MHz | 875 MHz | - | 885 MHz | FDD |
| 7 | 2500 MHz | - | 2570 MHz | 2620 MHz | - | 2690 MHz | FDD |
| 8 | 880 MHz | - | 915 MHz | 925 MHz | - | 960 MHz | FDD |
| 9 | 1749.9 MHz | - | 1784.9 MHz | 1844.9 MHz | - | 1879.9 MHz | FDD |
| 10 | 1710 MHz | - | 1770 MHz | 2110 MHz | - | 2170 MHz | FDD |
| 11 | 1427.9 MHz | - | 1447.9 MHz | 1475.9 MHz | - | 1495.9 MHz | FDD |
| 12 | 699 MHz | - | 716 MHz | 729 MHz | - | 746 MHz | FDD |
| 13 | 777 MHz | - | 787 MHz | 746 MHz | - | 756 MHz | FDD |
| 14 | 788 MHz | - | 798 MHz | 758 MHz | - | 768 MHz | FDD |
| 15 | Reserved | | | Reserved | | | FDD |
| 16 | Reserved | | | Reserved | | | FDD |
| 17 | 704 MHz | - | 716 MHz | 734 MHz | - | 746 MHz | FDD |
| 18 | 815 MHz | - | 830 MHz | 860 MHz | - | 875 MHz | FDD |
| 19 | 830 MHz | - | 845 MHz | 875 MHz | - | 890 MHz | FDD |
| 20 | 832 MHz | - | 862 MHz | 791 MHz | - | 821 MHz | FDD |
| 21 | 1447.9 MHz | - | 1462.9 MHz | 1495.9 MHz | - | 1510.9 MHz | FDD |
| 22 | 3410 MHz | - | 3490 MHz | 3510 MHz | - | 3590 MHz | FDD |
| 23¹ | 2000 MHz | - | 2020 MHz | 2180 MHz | - | 2200 MHz | FDD |
| 24 | 1626.5 MHz | - | 1660.5 MHz | 1525 MHz | - | 1559 MHz | FDD |
| 25 | 1850 MHz | - | 1915 MHz | 1930 MHz | - | 1995 MHz | FDD |
| 26 | 814 MHz | - | 849 MHz | 859 MHz | - | 894 MHz | FDD |
| 27 | 807 MHz | - | 824 MHz | 852 MHz | - | 869 MHz | FDD |
| 28 | 703 MHz | - | 748 MHz | 758 MHz | - | 803 MHz | FDD |
| 29 | N/A | | | 717 MHz | - | 728 MHz | FDD (NOTE 2) |
| 30 | 2305 MHz | - | 2315 MHz | 2350 MHz | - | 2360 MHz | FDD |
| 31 | 452.5 MHz | - | 457.5 MHz | 462.5 MHz | - | 467.5 MHz | FDD |
| 32 | N/A | | | 1452 MHz | - | 1496 MHz | FDD (NOTE 2) |
| 33 | 1900 MHz | - | 1920 MHz | 1900 MHz | - | 1920 MHz | TDD |
| 34 | 2010 MHz | - | 2025 MHz | 2010 MHz | - | 2025 MHz | TDD |
| 35 | 1850 MHz | - | 1910 MHz | 1850 MHz | - | 1910 MHz | TDD |
| 36 | 1930 MHz | - | 1990 MHz | 1930 MHz | - | 1990 MHz | TDD |
| 37 | 1910 MHz | - | 1930 MHz | 1910 MHz | - | 1930 MHz | TDD |
| 38 | 2570 MHz | - | 2620 MHz | 2570 MHz | - | 2620 MHz | TDD |
| 39 | 1880 MHz | - | 1920 MHz | 1880 MHz | - | 1920 MHz | TDD |
| 40 | 2300 MHz | - | 2400 MHz | 2300 MHz | - | 2400 MHz | TDD |
| 41 | 2496 MHz | - | 2690 MHz | 2496 MHz | - | 2690 MHz | TDD |
| 42 | 3400 MHz | - | 3600 MHz | 3400 MHz | - | 3600 MHz | TDD |
| 43 | 3600 MHz | - | 3800 MHz | 3600 MHz | - | 3800 MHz | TDD |
| 44 | 703 MHz | - | 803 MHz | 703 MHz | - | 803 MHz | TDD |
| 45 | 1447 MHz | - | 1467 MHz | 1447 MHz | - | 1467 MHz | TDD |
| 46 | 5150 MHz | - | 5925 MHz | 5150 MHz | - | 5925 MHz | TDD |
| | | | | | | | (NOTE 3, NOTE 4) |
| 47 | 5855 MHz | - | 5925 MHz | 5855 MHz | - | 5925 MHz | TDD |
| 48 | 3550 MHz | - | 3700 MHz | 3550 MHz | - | 3700 MHz | TDD |
| 49 | 3550 MHz | - | 3700 MHz | 3550 MHz | - | 3700 MHz | TDD (NOTE 8) |
| 50 | 1432 MHz | - | 1517 MHz | 1432 MHz | - | 1517 MHz | TDD |
| 51 | 1427 MHz | - | 1432 MHz | 1427 MHz | - | 1432 MHz | TDD |
| 52 | 3300 MHz | - | 3400 MHz | 3300 MHz | - | 3400 MHz | TDD |
| 53 | 2483.5 MHz | - | 2495 MHz | 2483.5 MHz | - | 2495 MHz | TDD |
| 65 | 1920 MHz | - | 2010 MHz | 2110 MHz | - | 2200 MHz | FDD |
| 66 | 1710 MHz | - | 1780 MHz | 2110 MHz | - | 2200 MHz | FDD (NOTE 5) |
| 67 | N/A | | | 738 MHz | - | 758 MHz | FDD (NOTE 2) |
| 68 | 698 MHz | - | 728 MHz | 753 MHz | - | 783 MHz | FDD |
| 69 | N/A | | | 2570 MHz | - | 2620 MHz | FDD (NOTE 2) |
| 70 | 1695 MHz | - | 1710 MHz | 1995 MHz | - | 2020 MHz | FDD⁶ |
| 71 | 663 MHz | - | 698 MHz | 617 MHz | - | 652 MHz | FDD |
| 72 | 451 MHz | - | 456 MHz | 461 MHz | - | 466 MHz | FDD |
| 73 | 450 MHz | - | 455 MHz | 460 MHz | - | 465 MHz | FDD |
| 74 | 1427 MHz | - | 1470 MHz | 1475 MHz | - | 1518 MHz | FDD |
| 75 | | N/A | | 1432 MHz | - | 1517 MHz | FDD (NOTE 2) |
| 76 | | N/A | | 1427 MHz | - | 1432 MHz | FDD (NOTE 2) |
| 85 | 698 MHz | - | 716 MHz | 728 MHz | - | 746 MHz | FDD |
| 87 | 410 MHz | - | 415 MHz | 420 MHz | - | 425 MHz | FDD |
| 88 | 412 MHz | - | 417 MHz | 422 MHz | - | 427 MHz | FDD |
| NOTE 1: | Band 6, 23 are not applicable. | | | | | | |
| NOTE 2: | Restricted to E-UTRA operation when carrier aggregation is configured. The downlink operating band is paired with the uplink operating band (external) of the carrier aggregation configuration that is supporting the configured Pcell. | | | | | | |
| NOTE 3: | This band is an unlicensed band restricted to licensed-assisted operation using Frame Structure Type 3. | | | | | | |
| NOTE 4: | Band 46 is divided into four sub-bands as in Table 5.5-1A. | | | | | | |
| NOTE 5: | The range 2180 - 2200 MHz of the DL operating band is restricted to E-UTRA operation when carrier aggregation is configured. | | | | | | |
| NOTE 6: | The range 2010-2020 MHz of the DL operating band is restricted to E-UTRA operation when carrier aggregation is configured and TX-RX separation is 300 MHz. The range 2005-2020 MHz of the DL operating band is restricted to E-UTRA operation when carrier aggregation is configured and TX-RX separation is 295 MHz. | | | | | | |
| NOTE 7: | Void | | | | | | |
| NOTE 8: | This band is restricted to licensed-assisted operation using Frame Structure Type 3. | | | | | | |

In another configuration, the repeater 220 can boost signals from the 3GPP Technical Specification (TS) 38.104 (Release 16 July 2019) bands or 5G frequency bands. In addition, the repeater 220 can boost selected frequency bands based on the country or region in which the repeater is used, including any of bands n1 - n86 in frequency range 1 (FR1), n257 - n261 in frequency range 2

(FR2), or other bands, as disclosed in 3GPP TS 38.104 V16.0.0 (July 2019), and depicted in Table 2 and Table 3:

**Table 2:**

| **NR *operating band*** | **Uplink (UL) *operating band* BS receive / UE transmit F_{UL,low} - F_{UL},_{high}** | **Downlink (DL) *operating band* BS transmit / UE receive F_{DL,low} - F_{DL,high}** | **Duplex Mode** |
|---|---|---|---|
| n1 | 1920 MHz - 1980 MHz | 2110 MHz - 2170 MHz | FDD |
| n2 | 1850 MHz - 1910 MHz | 1930 MHz - 1990 MHz | FDD |
| n3 | 1710 MHz - 1785 MHz | 1805 MHz - 1880 MHz | FDD |
| n5 | 824 MHz - 849 MHz | 869 MHz - 894 MHz | FDD |
| n7 | 2500 MHz - 2570 MHz | 2620 MHz - 2690 MHz | FDD |
| n8 | 880 MHz - 915 MHz | 925 MHz - 960 MHz | FDD |
| n12 | 699 MHz - 716 MHz | 729 MHz - 746 MHz | FDD |
| n14 | 788 MHz - 798 MHz | 758 MHz - 768 MHz | FDD |
| n18 | 815 MHz - 830 MHz | 860 MHz - 875 MHz | FDD |
| n20 | 832 MHz - 862 MHz | 791 MHz - 821 MHz | FDD |
| n25 | 1850 MHz - 1915 MHz | 1930 MHz - 1995 MHz | FDD |
| n28 | 703 MHz - 748 MHz | 758 MHz - 803 MHz | FDD |
| n30 | 2305 MHz - 2315 MHz | 2350 MHz - 2360 MHz | FDD |
| n34 | 2010 MHz - 2025 MHz | 2010 MHz - 2025 MHz | TDD |
| n38 | 2570 MHz - 2620 MHz | 2570 MHz - 2620 MHz | TDD |
| n39 | 1880 MHz - 1920 MHz | 1880 MHz - 1920 MHz | TDD |
| n40 | 2300 MHz - 2400 MHz | 2300 MHz - 2400 MHz | TDD |
| n41 | 2496 MHz - 2690 MHz | 2496 MHz - 2690 MHz | TDD |
| n48 | 3550 MHz - 3700 MHz | 3550 MHz - 3700 MHz | TDD |
| n50 | 1432 MHz - 1517 MHz | 1432 MHz - 1517 MHz | TDD |
| n51 | 1427 MHz - 1432 MHz | 1427 MHz - 1432 MHz | TDD |
| n65 | 1920 MHz - 2010 MHz | 2110 MHz - 2200 MHz | FDD |
| n66 | 1710 MHz - 1780 MHz | 2110 MHz - 2200 MHz | FDD |
| n70 | 1695 MHz - 1710 MHz | 1995 MHz - 2020 MHz | FDD |
| n71 | 663 MHz - 698 MHz | 617 MHz - 652 MHz | FDD |
| n74 | 1427 MHz - 1470 MHz | 1475 MHz - 1518 MHz | FDD |
| n75 | N/A | 1432 MHz - 1517 MHz | SDL |
| n76 | N/A | 1427 MHz - 1432 MHz | SDL |
| n77 | 3300 MHz - 4200 MHz | 3300 MHz - 4200 MHz | TDD |
| n78 | 3300 MHz - 3800 MHz | 3300 MHz - 3800 MHz | TDD |
| n79 | 4400 MHz - 5000 MHz | 4400 MHz - 5000 MHz | TDD |
| n80 | 1710 MHz - 1785 MHz | N/A | SUL |
| n81 | 880 MHz - 915 MHz | N/A | SUL |
| n82 | 832 MHz - 862 MHz | N/A | SUL |
| n83 | 703 MHz - 748 MHz | N/A | SUL |
| n84 | 1920 MHz - 1980 MHz | N/A | SUL |
| n86 | 1710 MHz - 1780 MHz | N/A | SUL |
| [n90] | 2496 MHz - 2690 MHz | 2496 MHz - 2690 MHz | TDD |

**Table 3:**

| **NR *operating band*** | **Uplink (UL) and Downlink (DL) *operating band* BS transmit/receive UE transmit/receive** | **Duplex Mode** |
|---|---|---|
| | F_{UL,low} - F_{UL,high} | |
| | F_{DL,low} - F_{DL,high} | |
| n257 | 26500 MHz - 29500 MHz | TDD |
| n258 | 24250 MHz - 27500 MHz | TDD |
| n260 | 37000 MHz - 40000 MHz | TDD |
| n261 | 27500 MHz - 28350 MHz | TDD |

The number of LTE or 5G frequency bands and the level of signal enhancement can vary based on a particular wireless device, cellular node, or location. Additional domestic and international frequencies can also be included to offer increased functionality. Selected models of the repeater 220 can be configured to operate with selected frequency bands based on the location of use. In another example, the repeater 220 can automatically sense from the wireless device 210 or base station 230 (or GPS, etc.) which frequencies are used, which can be a benefit for international travelers.

Installation of a repeater inside a vehicle can be difficult because of the number of cables used. The number of cables and the length of the cables can lead to undesired clutter. In addition, the routing of each cable in an after-market installation can require significant efforts. In order to hide the cables in a vehicle, various interior vehicle components may need to be removed, including, but not limited to, the dash board, door panels, seats, carpet, headliner, and other necessary parts to route a cable from one location to another. In one example, 3 cables are used to install a repeater: a cable between an outside antenna and the repeater, a cable between an inside antenna and the repeater, and a cable between a power supply and the repeater. Each cable may be routed in a different direction based on the location of the repeater, power supply, inside antenna, and outside antenna. It can be relatively expensive and time consuming to disassemble the vehicle, route the cables, and reassemble the vehicle. Reducing the routing of the cables, or the number of cables needed to install a repeater, such as a bidirectional cellular repeater, can enable significant savings in cost and time. It can also reduce the number of components in a vehicle that are removed and reinstalled, thereby reducing the chance of damaging any of the components.

In one example, a repeater system can comprise a repeater and a power adaptor integrated with a server antenna. By combining the power adaptor and server antenna, a single cable can be used to communicate a signal and provide power to the repeater. This can reduce the number of cables used to install the repeater in a vehicle. In this example, the repeater can comprise a donor port, a server port, and one or more amplification and filtering paths coupled between the donor port and the server port. The power adaptor integrated with the server antenna can be configured to be coupled to a power source. The power adaptor integrated with a server antenna can be configured to be coupled to the server port to enable the repeater to receive power from the power supply and to communicate the signal between the server antenna and the server port. The example repeater system will be described more fully below.

In one example, a repeater system can comprise a repeater and a power adaptor, and an external server antenna configured to connect to the repeater. The external server antenna can be located in an antenna enclosure. The repeater can comprise a donor port, a server port, and one or more amplification and filtering paths coupled between the donor port and the server port. The donor port can be configured to be connected to a donor antenna. The amplification and filtering paths can include a first direction amplification and filtering path and a second direction amplification and filtering path. The power adaptor can be configured to be connected to a power source to provide power over coax (POC) to the external server antenna enclosure. The external server antenna enclosure can be configured to provide POC to the server port of the repeater. This example will be described more fully in the proceeding paragraphs.

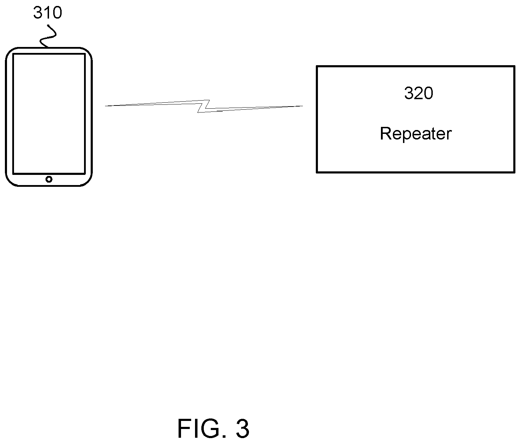

As illustrated in FIG. 3, a cellular signal booster or repeater 320 can be configured to receive a signal from a user equipment (UE) or wireless device 310 via a wireless connection of the wireless device 310 with the repeater 320. The wireless connection of the wireless device 310 with the repeater 320 can be one or more of a wireless personal area network (W-PAN), which can include a Bluetooth v5.1, Bluetooth v5, Bluetooth v4.0, Bluetooth Low Energy, Bluetooth v4.1, or Bluetooth v4.2 configured radio access technology (RAT), or a wireless local area network (W-LAN), which can include an Institute of Electronics and Electrical Engineers (IEEE) 802.11a, IEEE 802.11b, IEEE 802.11g, IEEE 802.11n, IEEE 802.11ac, or IEEE 802.11ad configured RAT. The repeater 320 can be configured to communicate with the wireless device 310 through a direct connection, a Near-Field Communication (NFC) configured radio access technology (RAT), an Ultra High Frequency (UHF) configured RAT, a TV White Space Band (TVWS) configured RAT, or any other industrial, scientific and medical (ISM) radio band configured RAT. Examples of such ISM bands include 2.4 gigahertz (GHz), 3.6 GHz, 4.9 GHz, 5 GHz, 5.9 GHz, or 6.1 GHz.

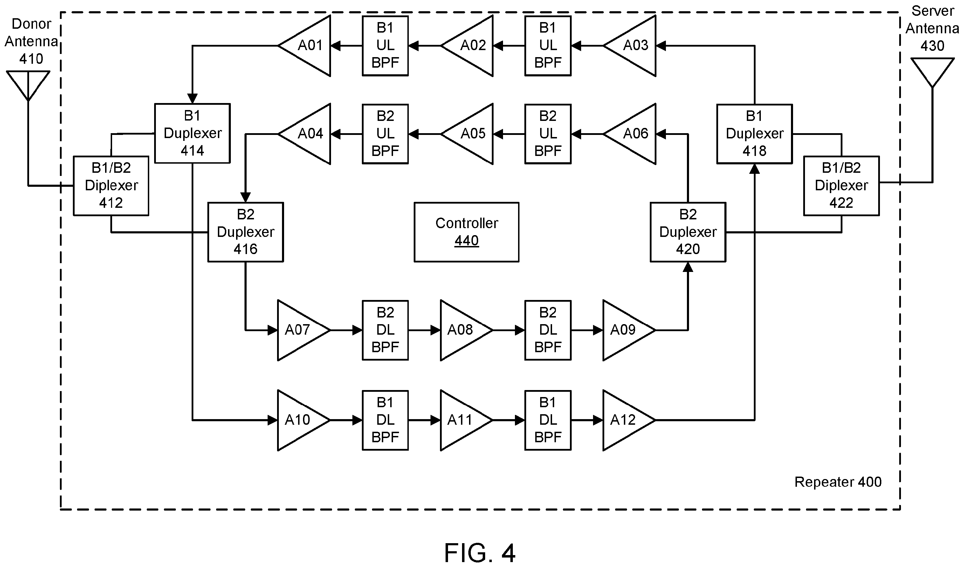

As illustrated in FIG. 4, in another example, a repeater can be configured as a multiband bi-directional frequency division duplex (FDD) wireless signal booster 400 configured to amplify an uplink signal and a downlink signal in multiple bands or channels using a separate signal path for one or more uplink frequency bands or channels and one or more downlink frequency bands or channels. In one embodiment, adjacent bands can be included on a same signal path. In the example of FIG. 4, a first band is labeled as Band 1 (B1) and a second band is labeled as Band 2 (B2). The labeling is intended to be generic, and does not represent specific bands, such as 3GPP LTE band 1 and band 2.

A donor antenna 410, or an integrated node antenna, can receive a downlink signal. For example, the downlink signal can be received from a base station. The downlink signal can be provided to a first B1/B2 diplexer 412, wherein B1 represents a first frequency band and B2 represents a second frequency band. The first B1/B2 diplexer 412 can direct selected portions of a received signal to a B1 downlink signal path and a B2 downlink signal path. A downlink signal that is associated with B1 can travel along the B1 downlink signal path to a first B1 duplexer 414. A portion of the received signal that is within the B2 can travel along the B2 downlink signal path to a first B2 duplexer 416. After passing the first B1 duplexer 414, the downlink signal can travel through a series of amplifiers (e.g. A10, A11, and A12) and downlink bandpass filters (e.g. B1 DL BPF) to a second B1 duplexer 418. In addition, the B2 downlink signal passing through the B2 duplexer 416, can travel through a series of amplifiers (e.g. A07, A08, and A09) and downlink band pass filters (e.g. B2 DL BPF) to a second B2 duplexer 420. At this point, the downlink signals (B1 or B2) have been amplified and filtered in accordance with the type of amplifiers and BPFs included in the multiband bi-directional wireless signal booster 400. The downlink signals from the second B1 duplexer 418 or the second B2 duplexer 420, respectively, can be provided to a second B1/B2 diplexer 422. The second B1/B2 diplexer 422 can direct the B1/B2 amplified downlink signal to a server antenna 430, or an integrated device antenna. The server antenna 430 can communicate the amplified downlink signal to a wireless device, such as a UE.

In another example, the server antenna 430 can receive an uplink (UL) signal from a wireless device. The uplink signal can include a first frequency range, such as a Band 1 signal and a second frequency range, such as a Band 2 signal. The uplink signal can be provided to the second B1/B2 diplexer 422. The second B1/B2 diplexer 422 can direct the signals, based on their frequency, to a B1 uplink signal path and a B2 uplink signal path. An uplink signal that is associated with B1 can travel along the B1 uplink signal path to a second B1 duplexer 418, and an uplink signal that is associated with B2 can travel along the B2 uplink signal path to a second B2 duplexer 420. The second B1 duplexer 418 can direct the B1 uplink signal to travel through a series of amplifiers (e.g. A01, A02, and A03) and uplink bandpass filters (B1 UL BPF) to the first B1 duplexer 414. In addition, the second B2 duplexer 420 can direct the B2 uplink signal to travel through a series of amplifiers (e.g. A04, A05, and A06) and downlink band pass filters (B2 UL BPF) to the first B2 duplexer 416. At this point, the uplink signals (B1 and B2) have been amplified and filtered in accordance with the type of amplifiers and BPFs included in the bi-directional wireless signal booster 400. The uplink signals from the first B1 duplexer 414 and the first B2 duplexer 416, respectively, can be provided to the first B1/B2 diplexer 412. The first B1/B2 diplexer 412 can direct the B1 and B2 amplified uplink signals to the donor antenna 410, or an integrated device antenna. The donor antenna 410, or donor antenna, can communicate the amplified uplink signals to a base station.

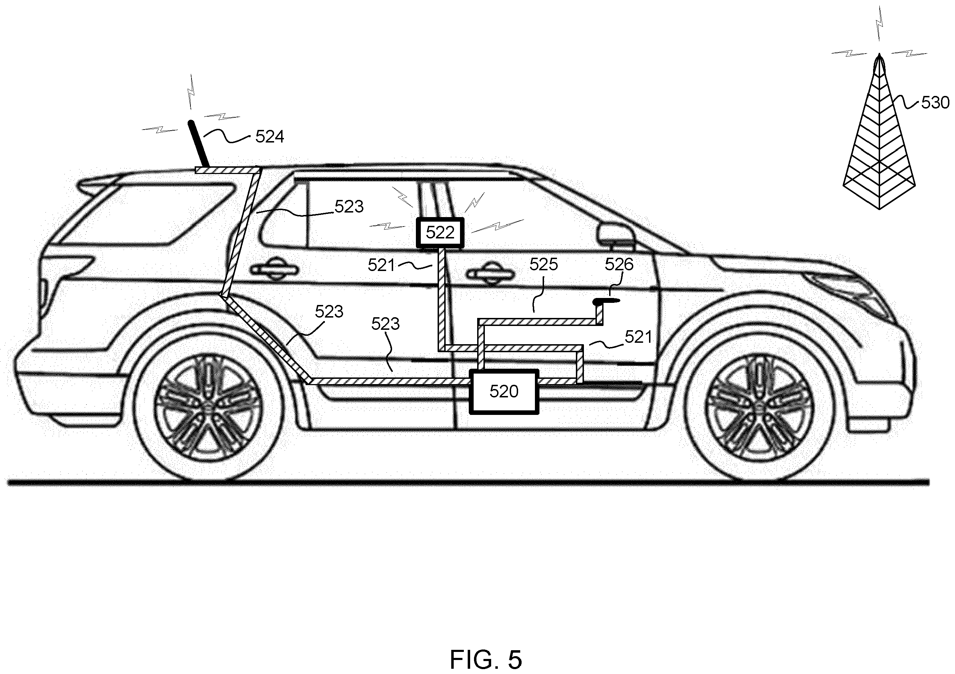

In another example, as illustrated in FIG. 5, a repeater 520 can comprise a donor port that can be configured to be connected to a donor antenna 524 via a cable 523. The repeater 520 can further comprise a server port that can be configured to be connected to a server antenna 522 via a cable 521. The repeater can be further configured to be connected to a power supply 526 via a cable 525. The repeater can be located in a vehicle (e.g., a car, a truck, a recreational vehicle (RV), or the like).

The server port of the repeater 520 can send a filtered, amplified downlink signal to the server antenna 522 for transmission of the downlink signal to a wireless device, such as a UE. The server antenna 522 can receive an uplink signal from a wireless device, such as the UE. The uplink signal can be sent, via the server port, to the repeater 520. The donor port can send a filtered, amplified uplink signal from the repeater to the donor antenna 524 via cable 523 for transmission of the uplink signal to a base station 530. The donor antenna 524 can receive a downlink signal from the base station 530. The downlink signal can be sent to the donor port for filtering and amplification at the repeater 520. In the example of FIG. 5, a total of three cables are used for the power 525, server port connection 521, and donor port connection 523. The three cables are typically installed to three separate locations in the vehicle.

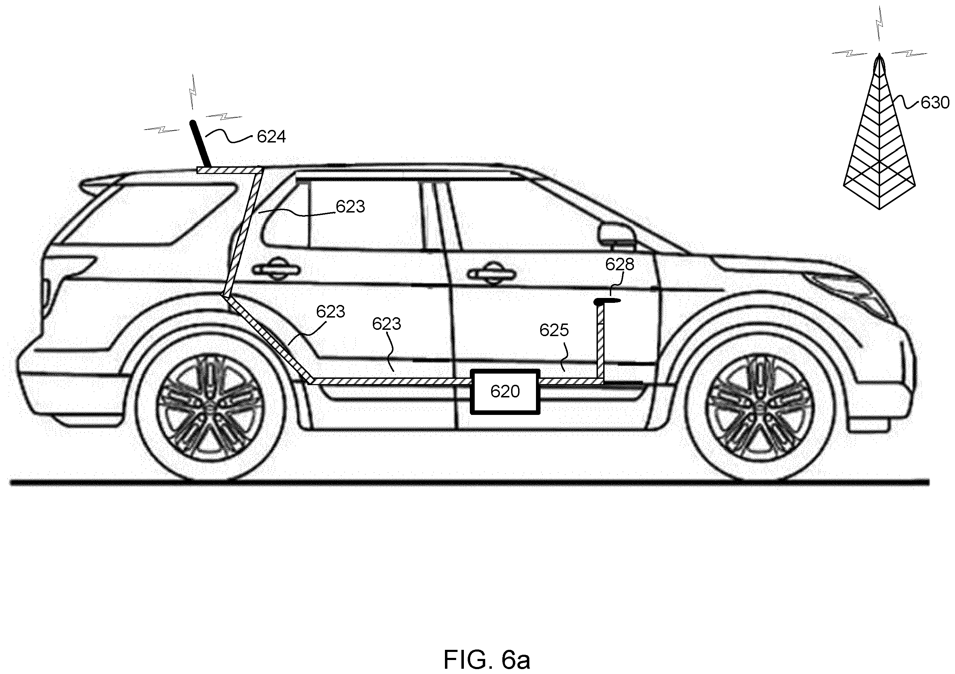

FIG. 6a provides another example of a repeater 620 installed in a vehicle. The FCC Consumer Booster requirements for a repeater operating in a vehicle severely limit the amount of power that can be sent from a server port on the repeater 620 to a server antenna 628. The power limitation ensures that the amplified cellular signals from the repeater 620 do not interfere with adjacent vehicles or nearby cellular phone users. Accordingly, the server antenna is typically located near the user, such as the driver or passenger in a vehicle. Modern vehicles typically locate a power source, such as a cigarette lighter adapter (CLA), or other direct current (DC) or alternating current (AC) power source near the driver and/or passengers. In order to limit the number of cables used for installation of a repeater system in a vehicle, while enabling the server antenna to be located near the user(s), the server antenna can be integrated in a housing with the power adapter to form an integrated server antenna 628. In one example, the integrated server antenna 628 can use a single coaxial cable to deliver both power and uplink and downlink signals to the repeater 620. This will be described more fully in the proceeding paragraphs.

The repeater 620 can comprise a donor port that can be configured to be connected to a donor antenna 624 via a cable 623. The donor antenna 624 can be configured to be coupled to an external location on a vehicle (e.g., a car, a truck, a recreational vehicle (RV), or the like). The repeater 620 can further comprise a server port that can be configured to be connected, via a cable 625, to a power adaptor (e.g., a cigarette lighter adaptor (CLA) or an on-board diagnostics (OBD) II port adaptor) integrated with a server antenna 628.

The repeater 620 can further comprise one or more amplification and filtering paths coupled between the donor port and the server port. The power adaptor integrated with a server antenna 628 can be configured to be coupled to a power source (e.g., a CLA power supply or an OBD II port power supply). The power adaptor integrated with a server antenna 628 can be further configured to be coupled to the server port to enable the repeater 620 to receive power from the power supply. The cable 625 can also enable the repeater 620 to communicate uplink and downlink signals between the server antenna integrated with the power adaptor 628 and the server port.

In another example, the repeater can be located in a vehicle. The power adaptor integrated with a server antenna 628 can transmit a downlink signal, which was filtered and amplified by the repeater 620, to a wireless device, such as a UE (i.e. 310 in FIG. 3). The power adaptor integrated with a server antenna 628 can receive an uplink signal from the wireless device, such as a UE, at the server antenna 628 and send the uplink signal to the server port at the repeater 620 for filtering and amplification at the repeater 620. The donor antenna 624 can communicate an uplink signal, which was filtered and amplified by the repeater 620, to a base station 630. The donor port of the repeater 620 can receive a downlink signal received at the donor antenna 624 from a base station 630, and filter and amplify the downlink signal.

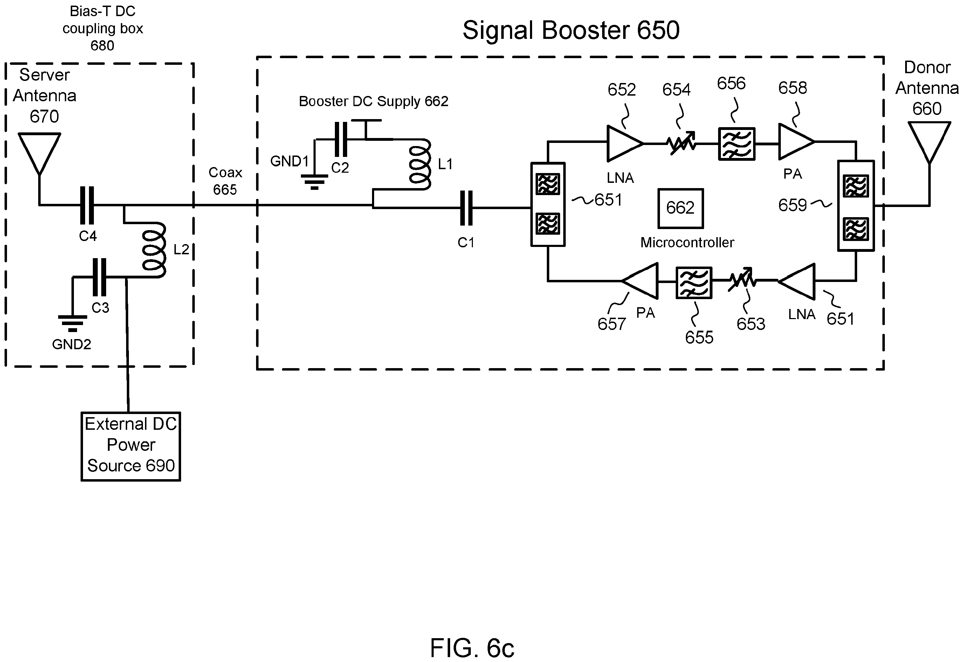

In another example, the power adaptor integrated with a server antenna 628 (i.e. the integrated power adaptor), can be configured to provide power over coax (POC) via cable 625 to the repeater 620 via the server port as described in further detail with reference to FIG. 6c. The coaxial cable can include an inner conductor and an outer conductor. A direct current (DC) bias can be applied to the inner conductor relative to the outer conductor of the cable. Radio frequency (RF) signals (i.e. the UL and DL signals) can travel along the same conductors (e.g. the inner conductor and the outer conductor) in the cable 625 (e.g., a coaxial cable) as the direct current (DC) bias. For example, the inner conductor of the cable 625 can carry a positive DC bias and the outer conductor of the cable 625 can be grounded or carry a negative DC bias. This example is not intended to be limiting. Other types of biasing can be used to provide a desired voltage and current from the integrated power adaptor 628 and the server port 620.

In another example, the cable 625 can comprise a leaky coaxial cable or radiating coaxial cable that can be configured to provide a DL signal from the repeater 620 to a wireless device.

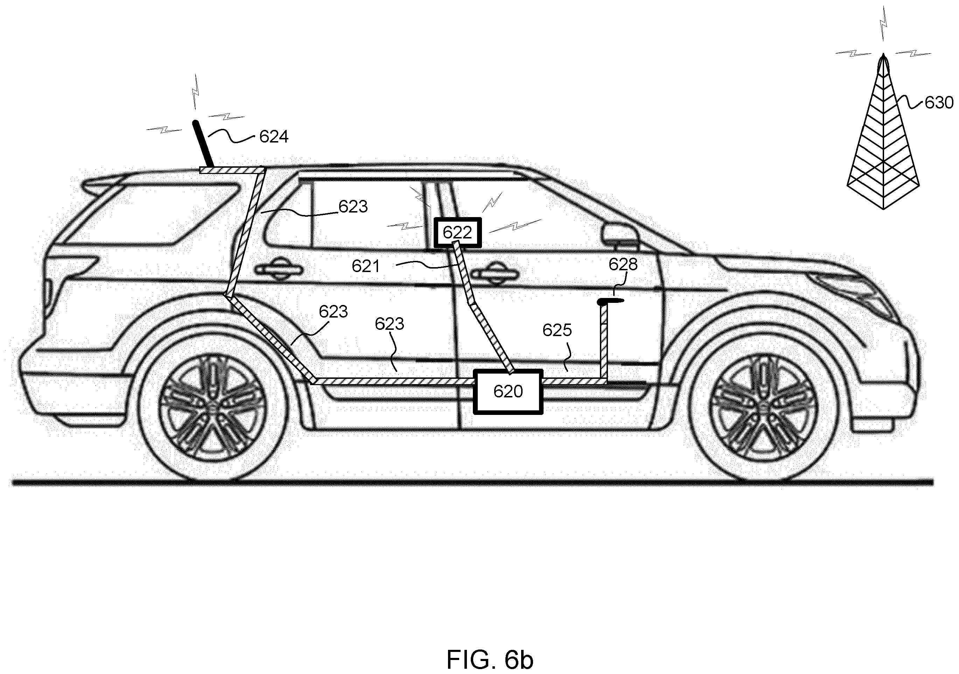

In another example, as illustrated in FIG. 6b, the repeater 620 can comprise an auxiliary port configured to communicate a DL signal from the auxiliary port of the repeater 620 to an auxiliary server antenna 622 via a cable 621. The auxiliary server antenna 622 can be configured to communicate an UL signal to the auxiliary port of the repeater 620. The auxiliary server antenna 622 can provide an additional coverage area when the coverage area provided by the integrated power adaptor 628 is unfavorable.

In another example, the power adaptor integrated with the server antenna 628 can comprise the power adaptor with the server antenna integrated with the power adaptor in a housing. The server antenna can be a cellular antenna configured to receive UL signals from a UE and transmit DL signals to the UE.

In another example, the integrated power adaptor 628 can be configured to convert 12 volt (V) direct current (DC) power to 5 volt DC power using a step down power converter, a step down voltage regulator, or the like. In another example, the integrated power adaptor 628 can further comprise one or more charging ports. A charging port can be a port with an adapter capable of providing a voltage and a current via the integrated power adapter. For example, the charging port can be a universal serial bus (USB) port, a lightning port, an Ethernet port, a 120 V power adapter, an adapter with a specified voltage and current for a selected country, and so forth. In another example, the integrated power adaptor 628 can further comprise one or more OBD II ports. In another example, the integrated power adaptor 628 can be configured to be connected to an OBD II port. The OBD II port can turn off when the vehicle turns off.

In another example, the power adaptor integrated with the server antenna 628 can be configured to be connected to a plurality of USB adaptors to enable the integrated power adaptor 628 to source adequate current to power the repeater 620. In another example, the power adaptor integrated with the server antenna 628 can comprise an alternating current (AC) adaptor configured to receive power from an AC power source.

In another example, as illustrated in FIG. 6c, a repeater 650 or signal booster 650 can comprise a first-direction amplification and filtering path (e.g., an uplink amplification and filtering path) and a second-direction amplification and filtering path (e.g., a downlink amplification and filtering path). The first-direction amplification and filtering path can include a low-noise amplifier 652, a variable attenuator 654, a filter 656 (e.g., a bandpass filter), and a power amplifier 658. The second-direction amplification and filtering path can include a low-noise amplifier 651, a variable attenuator 653, a filter 655 (e.g., a bandpass filter), and a power amplifier 657. The first-direction amplification and filtering path can be coupled between a duplexer 651 and a duplexer 659. The repeater can comprise a microcontroller. The duplexer 659 can be configured to be coupled to a donor antenna 660. The duplexer 651 can be configured to be coupled to a capacitor (e.g., C1). This example of a signal booster 650 is not intended to be limiting. A repeater configured to be coupled to a bias-T DC coupling box 680 can be used in place of the example of the signal booster 650 provided.

In one example, the capacitor (e.g., C1) can be configured to be coupled via a coaxial cable 665 to an inductor (e.g., L1) and a bias-T direct current (DC) coupling box 680. The inductor (e.g., L1) can be configured to be coupled to a capacitor (e.g., C2), which can be configured to be coupled to ground (e.g., GND1). The inductor (e.g., L1) can be configured to be coupled to a signal booster DC power supply 662.

In one example, the bias-T DC coupling box 680 can comprise an inductor (e.g., L2), a capacitor (e.g., C4), a capacitor (e.g., C3), and a ground connection (e.g., GND2). The bias-T DC coupling box 680 can optionally comprise a server antenna 670. In an alternative, the bias-T DC coupling box 680 can be configured to be coupled to the server antenna 670. In one example, the bias-T DC coupling box 680 can be configured to comprise both an internal server antenna 670 and an external server antenna (not shown).

In one example, the coaxial cable 665 can be configured to be coupled to an inductor (e.g., L2) and a capacitor (e.g., C4). The capacitor (e.g., C4) can be configured to be coupled to the server antenna 670. The inductor (e.g., L2) can be configured to be coupled to a capacitor (e.g., C3) and an external DC power source 690. The capacitor (e.g., C3) can be coupled to a ground connection (e.g., GND2).

In one example, the bias-T DC coupling box 680 can be configured to integrated with the server antenna 670 and configured to be coupled to the external DC power source 690 and a server port of the signal booster 650 to enable the signal booster 650 to receive power from the external DC power source 690 via the bias-T DC coupling box 680. In one example, the signal booster 650 can be configured to communicate a signal between the server antenna 670 and the server port of the signal booster 650.

In one example, the external DC power source 690 can comprise one or more of a CLA power supply or an OBD II port power supply. The external DC power source 690 can be configured to receive power from an AC power source.

In one example, the bias-T DC coupling box 680 can comprise a CLA or an OBD II port adaptor. The server antenna 670 can be integrated with the bias-T DC coupling box 680 or the server antenna 670 can be separate from the bias-T DC coupling box 680. In one example, the CLA can be configured to convert 12 volt DC power to 5 volt DC power using a step down power converter, a step down voltage regulator, or the like. In one example, the CLA can comprise one or more power adapter ports, such as universal serial bus (USB) ports configured to provide power to a user equipment (UE), a wireless device, or any other device configured to receive power from a power supply.

In one example, the bias-T DC coupling box 680 can be configured to provide power over coax to the signal booster 650 via the coaxial cable 665. The coaxial cable 665 can include an inner conductor and an outer conductor. A direct current (DC) bias can be applied to the inner conductor relative to the outer conductor of the coaxial cable 665. Radio frequency (RF) signals (i.e. the UL and DL signals) can travel along the same conductors (e.g. the inner conductor and the outer conductor) in the coaxial cable 665 as the direct current (DC) bias. For example, the inner conductor of the coaxial cable 665 can carry a positive DC bias and the outer conductor of the coaxial cable 665 can be grounded or carry a negative DC bias. This example is not intended to be limiting. Other types of biasing can be used to provide a desired voltage and current from the bias-T DC coupling box 680 to the server port of the signal booster 650. The DC bias can be used to power components of the signal booster 650. The DC bias can be removed prior to the duplexer. A signal, such as an uplink signal or downlink signal, can travel through the capacitor C1. Accordingly, RF signals can travel between the duplexer and the server antenna.

In one example, the bias-T DC coupling box 680 can comprise an external server antenna port (not shown), wherein the external server antenna port can be configured to be coupled to an external server antenna (not shown). In one example, the bias-T DC coupling box 680 can include one or more of a splitter, a directional coupler, or a tap configured to communicate a signal (i.e. an uplink signal or a downlink signal) between: the server antenna 670 and the server port of the signal booster 650, and an external server antenna and an external server antenna port.

In one example, the bias-T DC coupling box 680 can be configured to be coupled to the external DC power source 690 to provide power over coax to an external server antenna enclosure to be described in further detail in the proceeding paragraphs. The external server antenna enclosure can be configured to provide power over coax to the server port of the signal booster 650.

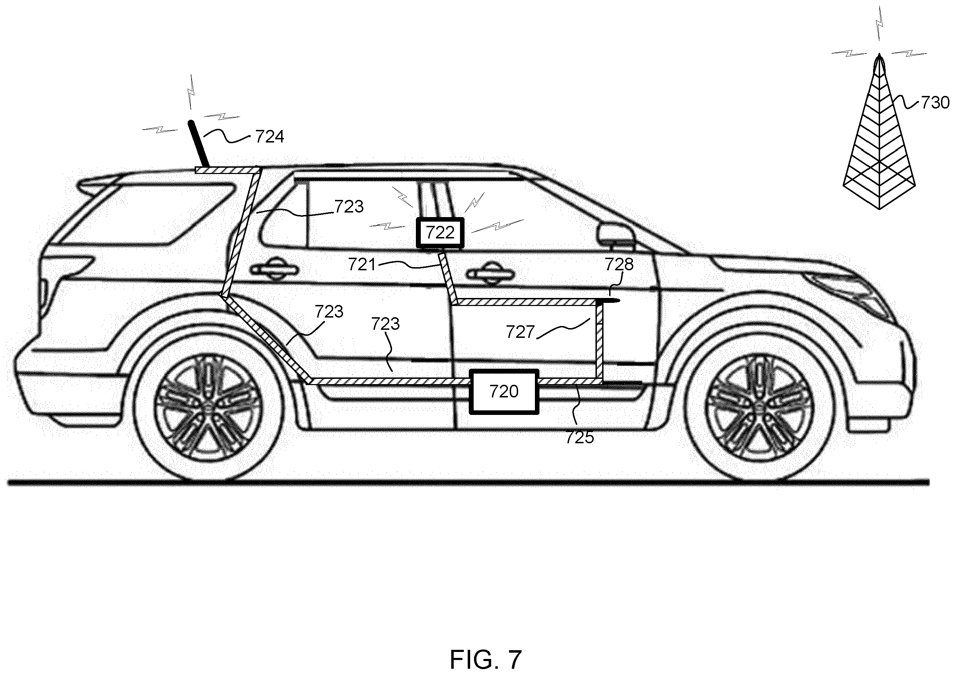

In some types of vehicles, a power source is not sufficiently close to the driver and/or passenger(s) to enable their UE to communicate with an integrated server antenna that includes both the power adapter and server antenna. In one example, as illustrated in FIG. 7, an additional server antenna 722 can be added to allow additional users to communicate with the repeater 720.

In the example illustrated in FIG. 7, a repeater 720 can comprise a donor port that can be configured to be connected to a donor antenna 724 via a cable 723. The donor antenna 724 can be configured to be coupled to an external location on a vehicle (e.g., a car, a truck, a recreational vehicle (RV), or the like). The repeater 720 can further comprise a server port that can be configured to be connected, via a cable 725, to a power adaptor (e.g., a cigarette lighter adaptor (CLA) or an on-board diagnostics (OBD) II port adaptor) integrated with a server antenna 728.

The repeater 720 can further comprise one or more amplification and filtering paths coupled between the donor port and the server port. The power adaptor integrated with a server antenna 728 can be configured to be coupled to a power source (e.g., a CLA power supply or an OBD II port power supply). The power adaptor integrated with a server antenna 728 can be further configured to be coupled to the server port to enable the repeater 720 to receive power from the power supply. The cable 725 can also enable the repeater 720 to communicate uplink and downlink signals between the server antenna integrated with the power adaptor 728 and the server port.

In another example, the repeater can be located in a vehicle. The power adaptor integrated with a server antenna 728 can transmit a downlink signal, which was filtered and amplified by the repeater 720, to a wireless device, such as a UE. The power adaptor integrated with a server antenna 728 can receive an uplink signal from the wireless device, such as a UE, at the server antenna and send the uplink signal to the server port at the repeater 720 for filtering and amplification at the repeater 720. The donor antenna 724 can transmit an uplink signal, which was filtered and amplified at the repeater 720, to a base station 730. The donor port of the repeater 720 can receive a downlink signal received at the donor antenna 724 from a base station 730, and filter and amplify downlink signal.

In another example, the power adaptor integrated with a server antenna 728 (i.e. the integrated power adaptor), can be configured to provide power over coax (POC) via cable 725 to the repeater 720 via the server port. The coaxial cable 725 can include an inner conductor and an outer conductor. A direct current (DC) bias can be applied to the inner conductor relative to the outer conductor of the cable 725. Radio frequency (RF) signals (i.e. the UL and DL signals) can travel along the same conductors (e.g. the inner conductor and the outer conductor) in the cable 725 (e.g., a coaxial cable) as the direct current (DC) bias. For example, the inner conductor of the cable 725 can carry a positive DC bias and the outer conductor of the cable 725 can be grounded or carry a negative DC bias. This example is not intended to be limiting. Other types of biasing can be used to provide a desired voltage and current from the integrated power adaptor 728 and the server port 720.

In another example, the cable 725 can comprise a leaky coaxial cable or radiating coaxial cable that can be configured to provide a DL signal from the repeater 720 to a wireless device.

In another example, the integrated power adaptor 728 can comprise an external server antenna port at the integrated power adaptor 728. The external server antenna port can be configured to be connected to an external server antenna 722 via a cable 721. The server antenna of the integrated power adaptor can be disconnected from the server port of the repeater when the external server antenna 722 is connected to the external server antenna port.

In another example, the integrated power adaptor 728 can comprise a switch that directs a DL signal from the repeater 720 to the external server antenna 722 and stops a DL signal from traveling from the repeater 720 to the server antenna integrated with the integrated power adaptor 728. In another example, the integrated power adaptor 728 can comprise a switch that directs an UL signal from the external server antenna 722 to the repeater 720 and stops an UL signal from traveling from the server antenna integrated with the integrated power adaptor 728 to the repeater 720.

In another example, the power adaptor integrated with a server antenna 728 (i.e. the integrated power adaptor) can comprise a tap 727 or a splitter 727 or a directional coupler 727 configured to communicate an UL signal from the server port to the server antenna integrated with the power adaptor 728. The tap 727 or splitter 727 or directional coupler 727 can be further configured to communicate a DL signal from the server antenna integrated with the power adaptor 728 to the server port. The tap 727 or splitter 727 or directional coupler 727 can be further configured to communicate an UL signal from the integrated power adaptor 728 to an external server antenna 722 via cable 721. The tap 727 or splitter 727 or directional coupler 727 can be further configured to communicate a DL signal from the external server antenna 722 via cable 721 to the integrated power adaptor 728.

In another example, the power adaptor integrated with the server antenna 728 can comprise the power adaptor with the server antenna integrated with the power adaptor in a housing. The server antenna can be a cellular antenna configured to receive UL signals from a UE and transmit DL signals to the UE.

In another example, the integrated power adaptor 728 can be configured to convert 12 volt (V) direct current (DC) power to 5 volt DC power using a step down power converter, a step down voltage regulator, or the like. In another example, the integrated power adaptor 728 can further comprise one or more power adapter ports, such as universal serial bus (USB) ports. In another example, the integrated power adaptor 728 can further comprise one or more OBD II ports. In another example, the integrated power adaptor 728 can be configured to be connected to an OBD II port. The OBD II port can turn off when the vehicle turns off.

In another example, the power adaptor integrated with the server antenna 728 can be configured to be connected to a plurality of USB adaptors to enable the integrated power adaptor 728 to source adequate current to power the repeater 720. In another example, the power adaptor integrated with the server antenna 728 can comprise an alternating current (AC) adaptor configured to receive power from an AC power source.

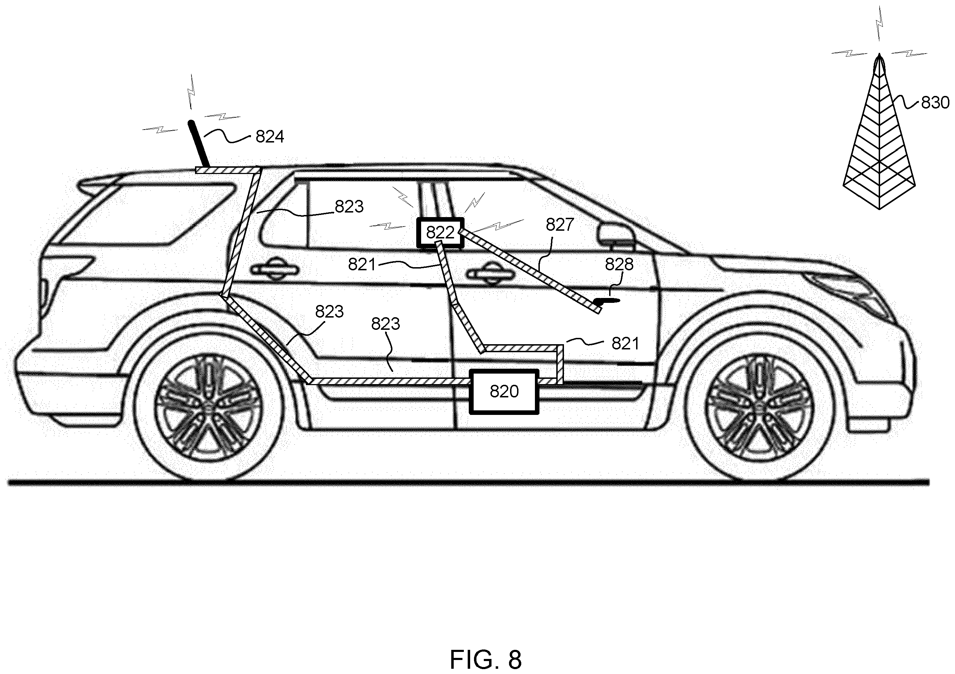

In another example, as illustrated in FIG. 8, an integrated server antenna 822, comprising a server antenna and a power source, such as a DC power source, can be configured to be located near a user. Power can be supplied from a power source 828 to the integrated server antenna 822. The integrated server antenna can then be configured to be connected to a server port of the repeater 820 to provide POC, allowing both power and the UL and DL signals to be communicated between the integrated server antenna 822 and the server 820.

In another example, the repeater 820 can comprise a donor port that can be configured to be connected to a donor antenna 824 via a cable 823. The donor antenna 824 can be configured to be coupled to an external location on a vehicle (e.g., a car, a truck, a recreational vehicle (RV), or the like). The repeater 820 can further comprise a server port that can be configured to be connected, via a cable 821, to a server antenna in a server antenna enclosure 822. The server antenna enclosure 822 can be further configured to be connected, via a cable 827, to a power adaptor (e.g., a cigarette lighter adaptor (CLA) or an on-board diagnostics (OBD) II port adaptor) 828.

The repeater 820 can further comprise one or more amplification and filtering paths coupled between the donor port and the server port. The power adaptor 828 can be configured to be coupled to a power source (e.g., a CLA power supply or an OBD II port power supply). The power adaptor 828 can be further configured to be coupled to the server antenna 822 via cable 827 to enable the repeater 820 to receive power from the power supply and to enable the power adaptor 828 to provide power over coax to the external server antenna enclosure 822. The external server antenna enclosure 822 can be configured to provide power over coax to the server port of the repeater 820 via cable 821.

In another example, the repeater 820 can be located in a vehicle. The server antenna 822 can transmit a downlink signal, which was filtered and amplified by the repeater 820, to a wireless device, such as a UE. The server antenna 822 can receive an uplink signal from a wireless device, such as a UE, at the server antenna 822 and send the uplink signal to the server port at the repeater 820 for filtering and amplification at the repeater. The donor antenna 824 can communicate an uplink signal, which was filtered and amplified by the repeater 820, to a base station 830. The donor port of the repeater 820 can receive a downlink signal received at the donor antenna 824 from a base station 830, and filter and amplify the downlink signal.

In another example, the power adaptor 828 can be configured to provide power over coax (POC) via cable 827 to the repeater 820 via the server antenna enclosure 822. The coaxial cable 827 can include an inner conductor and an outer conductor. A DC bias can be applied to the inner conductor relative to the outer conductor of the cable 827. Radio frequency (RF) signals (i.e. the UL and DL signals) can travel along the same conductors (e.g. the inner conductor and the outer conductor) in the cables 827 and 821 (e.g., a coaxial cable) as the direct current (DC) bias. For example, the inner conductor of the cables 827 and 821 can carry a positive DC bias and the outer conductor of the cables 827 and 821 can be grounded or carry a negative DC bias. This example is not intended to be limiting. Other types of biasing can be used to provide a desired voltage and current from the integrated power adaptor 828 and the server port 820.

In another example, the cable 821 can comprise a leaky coaxial cable or radiating coaxial cable that can be configured to provide a DL signal from the repeater 820 to a wireless device.

In another example, the external server antenna enclosure 822 can comprise an external server antenna configured to be coupled to the server port of the repeater 820. The external server antenna enclosure 822 can be configured to be connected to an external server antenna port of the repeater 820 via a cable 821.

In another example, the external server antenna enclosure 822 can comprise a direct current (DC) power jack integrated with the external server antenna enclosure 822. The DC power jack can be configured to provide POC to the server port of the repeater 820.

In another example, the power adaptor 828 can further comprise one or more power adapter ports, such as universal serial bus (USB) ports. In another example, the power adaptor 828 can further comprise one or more OBD II ports. In another example, the power adaptor 828 can be configured to be connected to an OBD II port. The OBD II port can turn off when the vehicle turns off.

In another example, the power adaptor 828 can be configured to be connected to a plurality of USB adaptors to enable the power adaptor 828 to source adequate current to power the repeater 820. In another example, the power adaptor 828 can comprise an alternating current (AC) adaptor configured to receive power from an AC power source. In another example, the power adaptor 828 can be integrated with an internal server antenna.

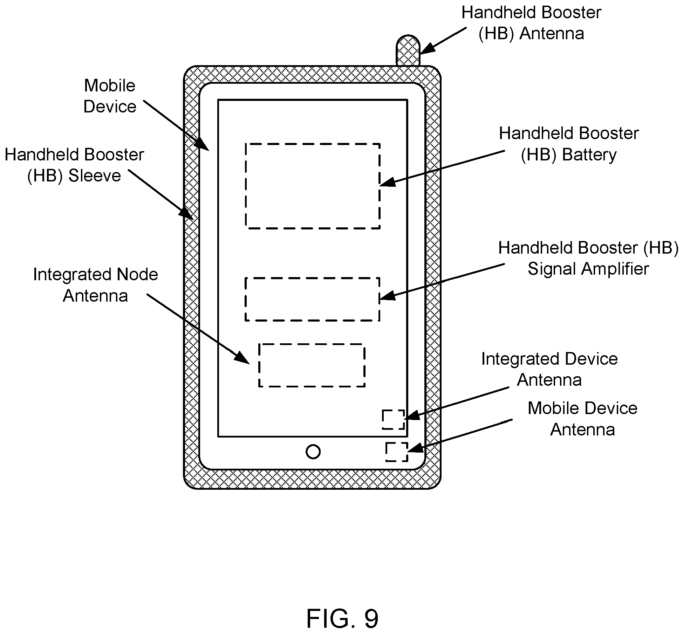

While various embodiments described herein, and illustrated in FIGS. 1-8, have been described with respect to a cellular signal amplifier with a donor antenna and a server antenna, this is not intended to be limiting. A repeater can also be accomplished using a handheld booster, as illustrated in FIG. 9. The handheld booster can include an integrated device antenna and an integrated node antenna that are typically used in place of the indoor antenna and outdoor antenna, respectively.

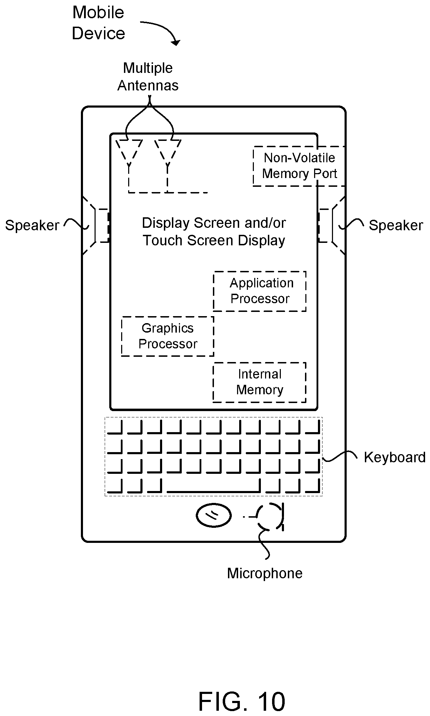

FIG. 10 provides an example illustration of the wireless device, such as a user equipment (UE), a mobile station (MS), a mobile wireless device, a mobile communication device, a tablet, a handset, or other type of wireless device. The wireless device can include one or more antennas configured to communicate with a node, macro node, low power node (LPN), or, transmission station, such as a base station (BS), an evolved Node B (eNB), a baseband processing unit (BBU), a remote radio head (RRH), a remote radio equipment (RRE), a relay station (RS), a radio equipment (RE), or other type of wireless wide area network (WWAN) access point. The wireless device can be configured to communicate using at least one wireless communication standard such as, but not limited to, 3GPP LTE, WiMAX, High Speed Packet Access (HSPA), Bluetooth, and WiFi. The wireless device can communicate using separate antennas for each wireless communication standard or shared antennas for multiple wireless communication standards. The wireless device can communicate in a wireless local area network (WLAN), a wireless personal area network (WPAN), and/or a WWAN. The wireless device can also comprise a wireless modem. The wireless modem can comprise, for example, a wireless radio transceiver and baseband circuitry (e.g., a baseband processor). The wireless modem can, in one example, modulate signals that the wireless device transmits via the one or more antennas and demodulate signals that the wireless device receives via the one or more antennas.

FIG. 10 also provides an illustration of a microphone and one or more speakers that can be used for audio input and output from the wireless device. The display screen can be a liquid crystal display (LCD) screen, or other type of display screen such as an organic light emitting diode (OLED) display. The display screen can be configured as a touch screen. The touch screen can use capacitive, resistive, or another type of touch screen technology. An application processor and a graphics processor can be coupled to internal memory to provide processing and display capabilities. A non-volatile memory port can also be used to provide data input/output options to a user. The non-volatile memory port can also be used to expand the memory capabilities of the wireless device. A keyboard can be integrated with the wireless device or wirelessly connected to the wireless device to provide additional user input. A virtual keyboard can also be provided using the touch screen.

### Examples

The following examples pertain to specific technology embodiments and point out specific features, elements, or actions that can be used or otherwise combined in achieving such embodiments.
Example 1 includes a repeater system comprising: a repeater comprising: a donor port; a server port; and one or more amplification and filtering paths coupled between the donor port and the server port; and a cigarette lighter adaptor (CLA) integrated with a server antenna configured to be coupled to: a CLA power supply; and the server port to enable the repeater to receive power from the CLA power supply and to communicate a signal between the server antenna and the server port.
Example 2 includes the repeater system of Example 1, wherein the integrated CLA is configured to provide power over coax (POC) to the repeater via the server port.
Example 3 includes the repeater system of Example 1, wherein the integrated CLA further comprises: an external server antenna port at the integrated CLA, wherein the external server antenna port is configured to be connected to an external server antenna.
Example 4 includes the repeater system of Example 3, wherein the server antenna of the integrated CLA is disconnected from the server port of the repeater when the external server antenna is connected to the external server antenna port.
Example 5 includes the repeater system of Example 3, wherein the integrated CLA further comprises: one or more of a splitter, a directional coupler, or a tap configured to communicate the signal between: the server antenna and the server port, and the external server antenna and the external server antenna port.
Example 6 includes the repeater system of Example 1, wherein the integrated CLA is configured to convert 12 volt (V) direct current (DC) power to 5 V DC power.
Example 7 includes the repeater system of Example 1, wherein the integrated CLA further comprises one or more power adapter ports. The power adapter ports can be USB ports, or another type of power adapter port, as previously described.
Example 8 includes the repeater system of Example 1, wherein the donor port is configured to be connected to a donor antenna.
Example 9 includes the repeater system of Example 8, wherein the donor antenna is configured to be mounted to an external location on a vehicle.
Example 10 includes the repeater system of Example 1, wherein the one or more amplification and filtering paths is a plurality of amplification and filtering paths.
Example 11 includes a repeater system comprising: a repeater comprising: a donor port; a server port; one or more amplification and filtering paths coupled between the donor port and the server port; and a cigarette lighter adaptor (CLA) configured to be connected to a CLA power supply to provide power over coax (POC) to an external server antenna enclosure; the external server antenna enclosure configured to provide POC to the server port of the repeater.
Example 12 includes the repeater system of Example 11, wherein the external server antenna enclosure comprises an external server antenna configured to be coupled to the server port of the repeater.
Example 13 includes the repeater system of Example 11, wherein the external server antenna enclosure further comprises: a direct current (DC) power jack integrated with the external server antenna enclosure, wherein the DC power jack is configured to provide POC to the server port of the repeater.
Example 14 includes the repeater system of Example 11, wherein the donor port is configured to be connected to a donor antenna.
Example 15 includes the repeater system of Example 14, wherein the donor antenna is configured to be mounted to an external location on a vehicle.
Example 16 includes the repeater system of Example 11, wherein the integrated CLA further comprises one or more power adapter ports. The power adapter port can be a USB port or another type of power adapter port, as previously described.
Example 17 includes the repeater system of Example 11, wherein the CLA is integrated with an internal server antenna.
Example 18 includes the repeater system of Example 11, wherein the one or more amplification and filtering paths is a plurality of amplification and filtering paths.
Example 19 includes a repeater system comprising: a repeater comprising: a donor port; a server port; and one or more amplification and filtering paths coupled between the donor port and the server port; and a power adaptor integrated with a server antenna configured to be coupled to: a power source; and the server port to enable the repeater to receive power from the power supply and to communicate a signal between the server antenna and the server port.
Example 20 includes the repeater system of Example 19, wherein the integrated power adaptor is configured to provide power over coax (POC) to the repeater via the server port.
Example 21 includes the repeater system of Example 19, wherein the integrated power adaptor further comprises: an external server antenna port at the integrated power adaptor, wherein the external server antenna port is configured to be connected to an external server antenna.
Example 22 includes the repeater system of Example 21, wherein the server antenna of the integrated power adaptor is disconnected from the server port of the repeater when the external server antenna is connected to the external server antenna port.
Example 23 includes the repeater system of Example 21, wherein the integrated power adaptor further comprises: one or more of a splitter, a directional coupler, or a tap configured to communicate the signal between: the server antenna and the server port, and the external server antenna and the external server antenna port.
Example 24 includes the repeater system of Example 19, wherein the integrated power adaptor is configured to convert 12 volt (V) direct current (DC) power to 5 V DC power.
Example 25 includes the repeater system of Example 19, wherein the integrated power adaptor further comprises one or more power adapter ports. The power adapter ports can be universal serial bus (USB) ports or another desired power adapter type, as previously described.
Example 26 includes the repeater system of Example 19, wherein the donor port is configured to be connected to a donor antenna.
Example 27 includes the repeater system of Example 26, wherein the donor antenna is configured to be coupled to an external location on a vehicle.
Example 28 includes the repeater system of Example 19, wherein the power adaptor is a cigarette lighter adaptor (CLA).
Example 29 includes the repeater system of Example 19, wherein the power source is a cigarette lighter adaptor (CLA) power supply.
Example 30 includes the repeater system of Example 19, wherein the power adaptor is an on-board diagnostics (OBD) II port adaptor.
Example 31 includes the repeater system of Example 19, wherein the power source is an on-board diagnostics (OBD) II port power supply.
Example 32 includes the repeater system of Example 19, wherein the one or more amplification and filtering paths is a plurality of amplification and filtering paths.
Example 33 includes a repeater system comprising: a repeater comprising: a donor port; a server port; one or more amplification and filtering paths coupled between the donor port and the server port; and a power adaptor configured to be connected to a power source to provide power over coax (POC) to an external server antenna enclosure; the external server antenna enclosure configured to provide POC to the server port of the repeater.
Example 34 includes the repeater system of Example 33, wherein the external server antenna enclosure comprises an external server antenna configured to be coupled to the server port of the repeater.
Example 35 includes the repeater system of Example 33, wherein the external server antenna enclosure further comprises: a direct current (DC) power jack integrated with the external server antenna enclosure, wherein the DC power jack is configured to provide POC to the server port of the repeater.
Example 36 includes the repeater system of Example 33, wherein the donor port is configured to be connected to a donor antenna.
Example 37 includes the repeater system of Example 36, wherein the donor antenna is configured to be coupled to an external location on a vehicle.
Example 38 includes the repeater system of Example 33, wherein the power adaptor further comprises one or more power adapter ports. The power adapter port can be a USB port or another desired type of port, as previously described.
Example 39 includes the repeater system of Example 33, wherein the power adaptor is integrated with an internal server antenna.
Example 40 includes the repeater system of Example 33, wherein the power adaptor is a cigarette lighter adaptor (CLA).
Example 41 includes the repeater system of Example 33, wherein the power supply is a cigarette lighter adaptor (CLA) power supply.
Example 42 includes the repeater system of Example 33, wherein the power adaptor is an on-board diagnostics (OBD) II port adaptor.
Example 43 includes the repeater system of Example 33, wherein the power source is an on-board diagnostics (OBD) II port power supply.
Example 44 includes the repeater system of Example 33, wherein the one or more amplification and filtering paths is a plurality of amplification and filtering paths.

Various techniques, or certain aspects or portions thereof, can take the form of program code (i.e., instructions) embodied in tangible media, such as floppy diskettes, compact disc-read-only memory (CD-ROMs), hard drives, non-transitory computer readable storage medium, or any other machine-readable storage medium wherein, when the program code is loaded into and executed by a machine, such as a computer, the machine becomes an apparatus for practicing the various techniques. Circuitry can include hardware, firmware, program code, executable code, computer instructions, and/or software. A non-transitory computer readable storage medium can be a computer readable storage medium that does not include signal. In the case of program code execution on programmable computers, the computing device can include a processor, a storage medium readable by the processor (including volatile and non-volatile memory and/or storage elements), at least one input device, and at least one output device. The volatile and non-volatile memory and/or storage elements can be a random-access memory (RAM), erasable programmable read only memory (EPROM), flash drive, optical drive, magnetic hard drive, solid state drive, or other medium for storing electronic data. The low energy fixed location node, wireless device, and location server can also include a transceiver module (i.e., transceiver), a counter module (i.e., counter), a processing module (i.e., processor), and/or a clock module (i.e., clock) or timer module (i.e., timer). One or more programs that can implement or utilize the various techniques described herein can use an application programming interface (API), reusable controls, and the like. Such programs can be implemented in a high level procedural or object oriented programming language to communicate with a computer system. However, the program(s) can be implemented in assembly or machine language, if desired. In any case, the language can be a compiled or interpreted language, and combined with hardware implementations.

As used herein, the term processor can include general purpose processors, specialized processors such as VLSI, FPGAs, or other types of specialized processors, as well as base band processors used in transceivers to send, receive, and process wireless communications.

It should be understood that many of the functional units described in this specification have been labeled as modules, in order to more particularly emphasize their implementation independence. For example, a module can be implemented as a hardware circuit comprising custom very-large-scale integration (VLSI) circuits or gate arrays, off-the-shelf semiconductors such as logic chips, transistors, or other discrete components. A module can also be implemented in programmable hardware devices such as field programmable gate arrays, programmable array logic, programmable logic devices or the like.

In one example, multiple hardware circuits or multiple processors can be used to implement the functional units described in this specification. For example, a first hardware circuit or a first processor can be used to perform processing operations and a second hardware circuit or a second processor (e.g., a transceiver or a baseband processor) can be used to communicate with other entities. The first hardware circuit and the second hardware circuit can be incorporated into a single hardware circuit, or alternatively, the first hardware circuit and the second hardware circuit can be separate hardware circuits.

Modules can also be implemented in software for execution by various types of processors. An identified module of executable code can, for instance, comprise one or more physical or logical blocks of computer instructions, which can, for instance, be organized as an object, procedure, or function. Nevertheless, the executables of an identified module need not be physically located together, but can comprise disparate instructions stored in different locations which, when joined logically together, comprise the module and achieve the stated purpose for the module.

Indeed, a module of executable code can be a single instruction, or many instructions, and can even be distributed over several different code segments, among different programs, and across several memory devices. Similarly, operational data can be identified and illustrated herein within modules, and can be embodied in any suitable form and organized within any suitable type of data structure. The operational data can be collected as a single data set, or can be distributed over different locations including over different storage devices, and can exist, at least partially, merely as electronic signals on a system or network. The modules can be passive or active, including agents operable to perform desired functions.

Reference throughout this specification to "an example" or "exemplary" means that a particular feature, structure, or characteristic described in connection with the example is included in at least one embodiment of the present invention. Thus, appearances of the phrases "in an example" or the word "exemplary" in various places throughout this specification are not necessarily all referring to the same embodiment.

As used herein, a plurality of items, structural elements, compositional elements, and/or materials can be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention can be referred to herein along with alternatives for the various components thereof. It is understood that such embodiments, examples, and alternatives are not to be construed as defacto equivalents of one another, but are to be considered as separate and autonomous representations of the present invention.

Furthermore, the described features, structures, or characteristics can be combined in any suitable manner in one or more embodiments. In the following description, numerous specific details are provided, such as examples of layouts, distances, network examples, etc., to provide a thorough understanding of embodiments of the invention. One skilled in the relevant art will recognize, however, that the invention can be practiced without one or more of the specific details, or with other methods, components, layouts, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

## Claims

1. A repeater system comprising:
a repeater comprising:
a donor port;
a server port; and
one or more amplification and filtering paths coupled between the donor port and the server port; and
a power adaptor integrated with a server antenna configured to be coupled to:
a power source; and
the server port to enable the repeater to receive power from the power supply and to communicate a signal between the server antenna and the server port.

2. The repeater system of claim 1, wherein the integrated power adaptor is configured to provide power over coax (POC) to the repeater via the server port.

3. The repeater system of either claim 1 or claim 2, wherein the integrated power adaptor further comprises:
an external server antenna port at the integrated power adaptor,
wherein the external server antenna port is configured to be connected to an external server antenna.

4. The repeater system of claim 3, wherein the server antenna of the integrated power adaptor is disconnected from the server port of the repeater when the external server antenna is connected to the external server antenna port.

5. The repeater system of either claim 3 or claim 4, wherein the integrated power adaptor further comprises:
one or more of a splitter, a directional coupler, or a tap configured to communicate the signal between:
the server antenna and the server port, and
the external server antenna and the external server antenna port.

6. The repeater system of any one of the preceding claims, wherein the integrated power adaptor is configured to convert 12 volt (V) direct current (DC) power to 5 V DC power.

7. The repeater system of any one of the preceding claims, wherein the integrated power adaptor further comprises one or more charging ports.

8. The repeater system of any one of the preceding claims, wherein the donor port is configured to be connected to a donor antenna.

9. The repeater system of claim 8, wherein the donor antenna is configured to be coupled to an external location on a vehicle.

10. The repeater system of any one of the preceding claims, wherein:
the power adaptor is one or more of:
a cigarette lighter adaptor (CLA); or
an on-board diagnostics (OBD) II port adaptor; and
the power source is one or more of:
a cigarette lighter adaptor (CLA) power supply or
an on-board diagnostics (OBD) II port power supply.

11. A repeater system configuration comprising:
a repeater comprising:
a donor port;
a server port;
one or more amplification and filtering paths coupled between the donor port and the server port; and
a power adaptor configured to be connected to a power source to provide power over coax (POC) to an external server antenna enclosure;
the external server antenna enclosure configured to provide POC to the server port of the repeater.

12. The repeater system configuration of claim 11, wherein the external server antenna enclosure comprises one or more of:
an external server antenna configured to be coupled to the server port of the repeater; or
a direct current (DC) power jack integrated with the external server antenna enclosure, wherein the DC power jack is configured to provide POC to the server port of the repeater.

13. The repeater system configuration of either claim 11 or claim 12, wherein the donor port is configured to be connected to a donor antenna that is configured to be coupled to an external location on a vehicle.

14. The repeater system configuration of any one of claims 11 to 13, wherein the power adaptor:
further comprises one or more charging ports; or
is integrated with an internal server antenna.

15. The repeater system configuration of any one of claims 11 to 14, wherein:
the power adaptor is one or more of:
a cigarette lighter adaptor (CLA); or
an on-board diagnostics (OBD) II port adaptor; and
the power source is one or more of:
a cigarette lighter adaptor (CLA) power supply; or
an on-board diagnostics (OBD) II port power supply.
